# EUROPEAN PATENT APPLICATION

(11) **EP 1 511 111 A1**
(43) Date of publication of application: **02.03.2005**
(21) Application number: 04020169.1
(22) Date of filing: 25.08.2004
(51) Int. Cl.: H01M 8/06, H01M 8/04

(54) **Fuel cell system**

(30) Priority: 27.08.2003 JP 2003209004
(71) Applicant: Nissan Motor Co., Ltd., Yokohama-shi, Kanagawa (JP)
(72) Inventor: Shoji, Tadashi, Yokosuka-shi Kanagawa-ken (JP); Hamada, Karuki, Yokohama-shi Kanagawa-ken (JP)
(74) Representative: Grünecker, Kinkeldey, Stockmair & Schwanhäusser Anwaltssozietät

(57) **Abstract**

A fuel cell generates electric power by the electrochemistry reaction of hydrogen and the oxygen in air. After the hydrogen discharged without being consumed of an anode is burned in a burner, it is discharged out of a fuel cell system. However, while activity of the combustion catalyst in the burner is not carried out, the burner cannot bum hydrogen. Therefore, the fuel cell system has a cathode switch valve in the middle of the cathode line, and when the fuel cell system stops, non-saturated air of a compressor bypasses the fuel cell, and supplies the air to the catalyst burner. Although the cathode exhaust gas of saturated steam is circulating to the catalyst burner at the time of regular operation of a fuel cell, the non-saturated air which bypasses the fuel cell and is supplied can replace the inside of the catalyst burner with dry air. Therefore, the amount of steam in the catalyst burner 9 is decreased at the time of a stop, and the catalyst is quickly activated at the time of re-starting.

## Description

### Background of the invention

The fuel cell system currently described by JP2002-343391A is equipped with a catalyst burner which burns discharged hydrogen in order to prevent discharge to the atmosphere of hydrogen used for a solid high polymer type fuel cell. While the solid high polymer type fuel cell using a solid high polymer electrolyte has a low temperature of operation and handling is easy, the high polymer electrolyte film has the characteristic of not fully demonstrating hydrogen ion conductivity, if not fully humidified. The solid high polymer type fuel cell has a stratified structure that piles up a separator and a resin film with hydrogen conductivity by turn. The separator forms the hydrogen channel in one side, and forms the air channel in an opposite side. The fuel cell system is comprised of a hydrogen supply device with which a fuel cell system supplies hydrogen as fuel gas, a compressor that supplies air as oxidizer gas, and a fuel cell stack which has an anode and a cathode. However, all the hydrogen supplied to a fuel cell is emitted, without reacting. This happens, when the hydrogen concentration in a fuel cell is less than minimum concentration. This unreacted hydrogen is emitted as discharge hydrogen, and may exceed a combustion minimum concentration near an outlet. Therefore, it is necessary to prevent that the hydrogen concentration emitted from leaching an inflammable range.

For this reason, the fuel cell system equips the discharge hydrogen line with a catalyst burner for burning discharge hydrogen. This catalyst burner has prevented discharge to the atmosphere of hydrogen by burning unreacted discharge hydrogen. However, since a fuel cell maintains a humidification state as above-mentioned in order to make hydrogen and oxygen react, steam also flows into a catalyst burner with discharge gas. If moisture exists in a catalyst burner, a catalyst burner cannot demonstrate sufficient inflammable ability. Then, a blower is established in a catalyst burner, inhalation of air is carried out from the exterior, and combustion of discharge hydrogen is promoted.

### Summary of the Invention

However, in the fuel cell system mentioned above, in the case of rainy weather, or in high humidity, since water vapor is contained in the air which is inhaled of air by the blower, a catalyst burner does not function properly. Furthermore, when a catalyst burner is filled with humidification air, when a fuel cell stops and temperature falls, the steam in a catalyst burner may saturate, and moisture may condense on the catalyst surface. When moisture adheres to the catalyst surface, it becomes impossible thus for the catalyst burner to burn hydrogen. Therefore, it is desirable to reduce the amount of steam in a burner as much as possible at the time of a stop of the fuel cell system.

Moreover, by car, because a car has space restrictions, the system which needs both the compressors which supply air to a fuel cell and the blower for burners is not desirable. In order to achieve the above object, the present invention provides a fuel cell system comprising a fuel cell which generates electrical power by causing hydrogen and oxygen to react; a burner which burns the discharge cathode gas and discharge anode gas from the fuel cell; a cathode line which supplies cathode gas to the fuel cell; an anode line which supplies anode gas to the fuel cell; a cathode switch valve which switches the flow of cathode gas in the middle of the cathode line; a cathode bypass line which connects the cathode switch valve and the catalyst burner; and a controller which controls the cathode switch valve to supply cathode gas to the catalyst burner when a fuel cell stops.

Since the steam in the catalyst burner can be transposed to cathode gas and the steam in the catalyst burner can be decreased, a catalyst carries out activity quickly at the time of starting of the fuel cell. Moreover, since it becomes unnecessary to provide the blower that takes in air from the exterior to the catalyst burner, the fuel cell system becomes simple in composition.

The details as well as other features and advantages of this invention are set forth in the remainder of the specification and are shown in the accompanying drawings.

### Brief Description of the Drawings

FIG. 1 is a schematic diagram of a fuel cell system according to a first embodiment of this invention.

FIG. 2 is a flow chart explaining stop control processing according to a first embodiment of this invention.

FIG. 3 is a schematic diagram of a fuel cell system according to a second embodiment of this invention.

FIG. 4 is a flow chart explaining stop control processing according to a second embodiment of this invention.

FIG. 5 is a schematic diagram of a fuel cell system according to a third embodiment of this invention.

FIG. 6 is a flow chart explaining stop control processing according to a third embodiment of this invention.

### Description of the preferred embodiments

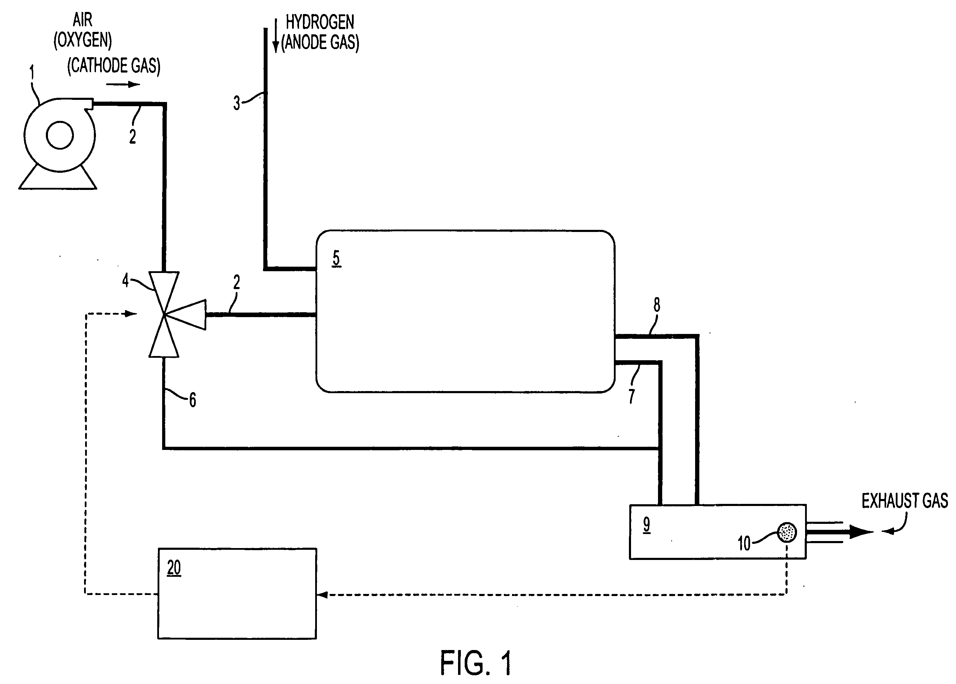

Fig. 1 shows the composition of the first embodiment of the operation of the fuel cell system of this invention.

As shown in FIG.1, a fuel cell system is comprised of a compressor 1 which supplies air (cathode gas) as oxygen gas, and a cathode line 2 which supplies air compressed by the compressor 1 to a fuel cell 5, and an anode line 3 which supplies hydrogen (anode gas) to the fuel cell 5, and a catalyst burner 9 which burns discharge hydrogen from the fuel cell 5, and a cathode exhaust gas line 7 which discharges the oxygen after a reaction from the fuel cell 5 to the catalyst burner 9, and an anode exhaust gas line 8 which discharges the hydrogen after a reaction from the fuel cell 5 to the catalyst burner 9, and an exhaust temperature sensor 10 which measures the temperature of the exhaust gas discharged from the catalyst burner 9.

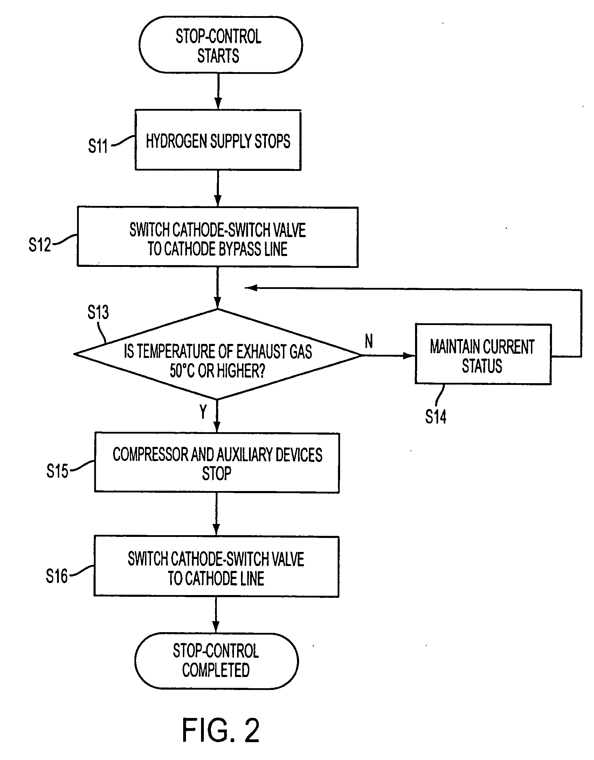

A cathode switch valve 4 is provided in the middle of the cathode line 2. The cathode switch valve 4 switches the flow of oxygen to the cathode line 2 or the cathode bypass line 6. The cathode bypass line 6 is connected to the cathode exhaust gas line 7. A controller 20 performs control of the cathode switch valve 4. Below, the concrete control logic of a controller 20 is explained along with the flow chart shown in a FIG. 2.

Stop control of the fuel cell system is performed as follows. First, in step S11, supply of the hydrogen to the fuel cell 5 is stopped. In step S12, the cathode switch valve 4 is switched to the cathode bypass line 6. The air which does not go via the fuel cell 5, i.e., the non-saturation air is supplied to the catalyst burner 9. In Step S13, it is judged whether the temperature of an exhaust gas rises to more than predetermined temperature (in this embodiment 50 degrees C). This state is maintained until the temperature of an exhaust gas rises to predetermined temperature (step S14). If the temperature of an exhaust gas rises to predetermined temperature, processing will progress to step S15. Thus, the reason for judging whether the temperature of an exhaust gas rises more than predetermined temperature is the following. Ceramic particles are contained in the catalyst burner 9, and since a ceramic particle is porous, it has a water retention nature. The moisture contained in porous object evaporates by passing air from the cathode bypass line 6. When the porous object is retaining water, the gas temperature around the object falls by evaporation heat, and the temperature of the exhaust gas falls. Furthermore, if circulation of air is continued, the moisture in a burner evaporates and temperature begins to rise soon. Therefore, it is possible to judge that the amount of water retention of a porous object decreased by detecting the rise of the temperature of the exhaust gas. The temperature when the moisture in a burner fully evaporates is made into predetermined temperature, and the processing judges whether the moisture in a burner evaporates by whether it goes up to the predetermined temperature. Operation of a compressor and other auxiliaries are stopped in step S15, and in step S16, the cathode switch valve 4 is returned to the cathode line 2, and the processing ends.

According to this embodiment, the cathode switch valve 4 is provided in the middle of the cathode line 2, and when the fuel cell system stops, the air (non-saturated) of compressor 1 bypasses the fuel cell 5, and supplies the catalyst burner 9. Although the cathode exhaust gas of saturated steam is circulating mostly to the catalyst burner 9 at the time of regular operation of a fuel cell, the non-saturated air which bypasses the fuel cell 5 and is supplied to the catalyst burner 9 can replace the inside of the catalyst burner 9 with dry air. Therefore, the amount of steam in the catalyst burner 9 is decreased at the time of a stop, and a catalyst is quickly activated at the time of re-starting.

Moreover, since it is not necessary to install the air source for exclusive use in the catalyst burner, the fuel cell system has a simple composition, and it saves weight and space in vehicles. Furthermore, if the temperature of an exhaust gas (measured by the exhaust temperature sensor 10) rises more than the predetermined temperature, it is made to suspend the fuel cell system. The fuel cell system can judge correctly whether the moisture in the catalyst burner is fully evaporated. Therefore, the operation time of a compressor 1 is appropriately controllable.

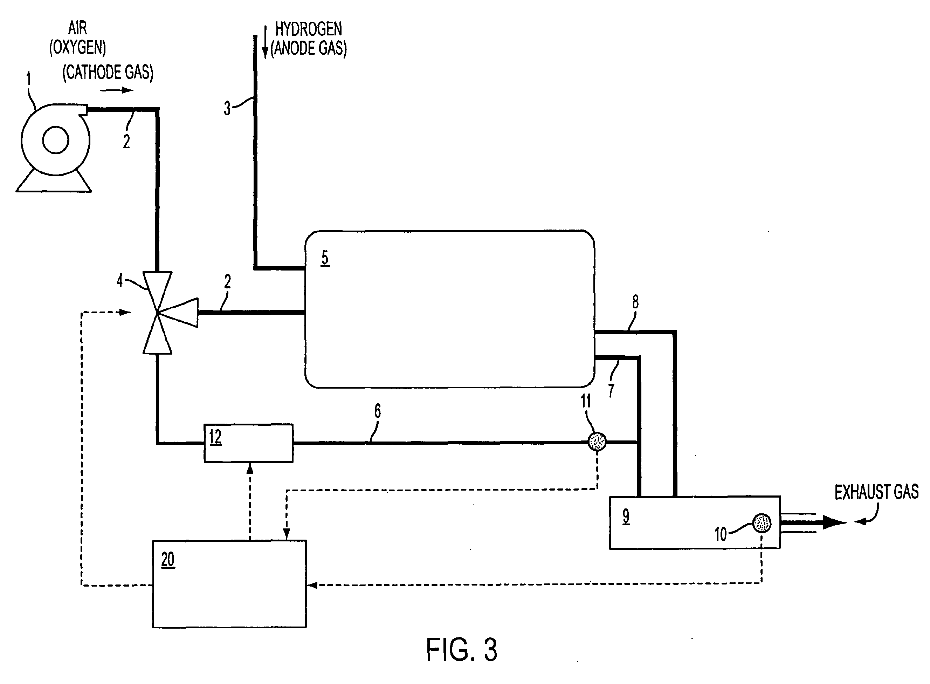

Fig. 3 shows the composition of the second embodiment of the operation of the fuel cell system of this invention. In this embodiment, a heating device 12 is provided in the middle of the cathode bypass line 6 of the first embodiment. The heating device 12 is using electric heaters, such as energization resistance heating, and energy efficiency of the heating device 12 is good and the heating device 12 can also attain miniaturization of space. A cathode gas temperature sensor 11 is provided near the lower port of the cathode bypass line 6, and the cathode gas temperature sensor 11 measures the temperature of the air (cathode gas), which flows in the cathode bypass line 6. Other composition and actions are the same as that of the first embodiment.

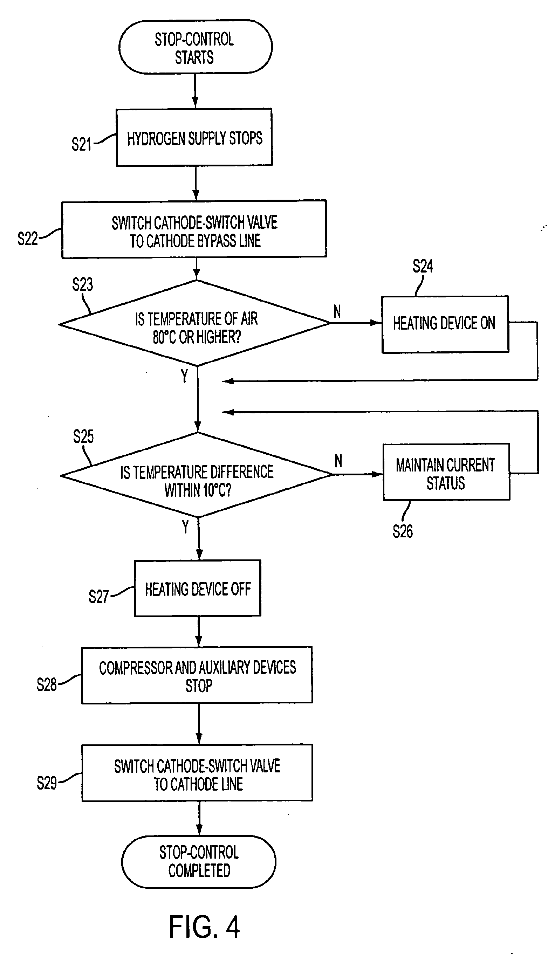

Below, the concrete control logic of a controller 20 is explained along with the flow chart shown in FIG. 4.

Stop control of the fuel cell system is performed as follows. First, in step S21, supply of the hydrogen to the fuel cell 5 is stopped. In step S22, the cathode switch valve 4 is switched to the cathode bypass line 6. The air that does not go via the fuel cell 5, i.e., the non-saturated air is supplied to the catalyst burner 9. In step S23, the cathode gas temperature sensor 11 measures the temperature of the air which flows in the cathode bypass line 6. If the temperature of the air which flows in the cathode bypass line 6 does not fulfill predetermined temperature (in this embodiment 80 degrees C), the air is heated because the heating device 12 operates (step S24). This predetermined temperature is sufficient to evaporate the moisture in the catalyst burner 9. In step S25, it is judged whether the difference of temperature between the temperature (measured value of the cathode gas temperature sensor 11) of air and the temperature (measured value of the exhaust temperature sensor 10) of the exhaust gas is less than a predetermined difference of temperature (in this embodiment 10 degrees C). When the difference of temperature is not less than a predetermined difference of temperature, operation of the heating device 12 is continued (step S26). If the difference of temperature becomes within the predetermined difference of temperature, processing will progress to step S27.

The reason for judging whether the difference of temperature is less than the predetermined difference of temperature is the following.

If air is passed from the cathode bypass line 6 when the catalyst burner 9 is humid, the temperature of the exhaust gas will fall by evaporation heat. Furthermore, if circulation of air is continued as it is, the moisture in the catalyst burner 9 evaporates, temperature begins to rise soon, and the difference of temperature of the temperature (measured value of the cathode gas temperature sensor 11) of air and the temperature (measured value of the exhaust temperature sensor 10) of an exhaust gas decreases. The difference of temperature when the moisture in the catalyst burner 9 fully evaporates is set up beforehand, and the difference of temperature at that time is made into a predetermined difference of temperature.

In step S27, the heating device 12 stops operation. Operation of a compressor and other auxiliaries are stopped in step S28, and in step S29, the cathode switch valve 4 is returned to the cathode line 2, and the processing ends.

According to this embodiment, since the fuel cell system has the heating device 12 which heats the air which flows in the cathode bypass line 6, the fuel cell system promotes evaporation of the moisture in the catalyst burner 9, and shortens the time required to stop the fuel cell system takes.

Moreover, the fuel cell system can detect the evaporation heat of a porous object correctly, even if it changes the temperature of the air which flows the cathode bypass line 6, since the fuel cell system stops if the difference of temperature of the air which flows in the cathode bypass line 6, and the exhaust gas becomes within a predetermined difference of temperature.

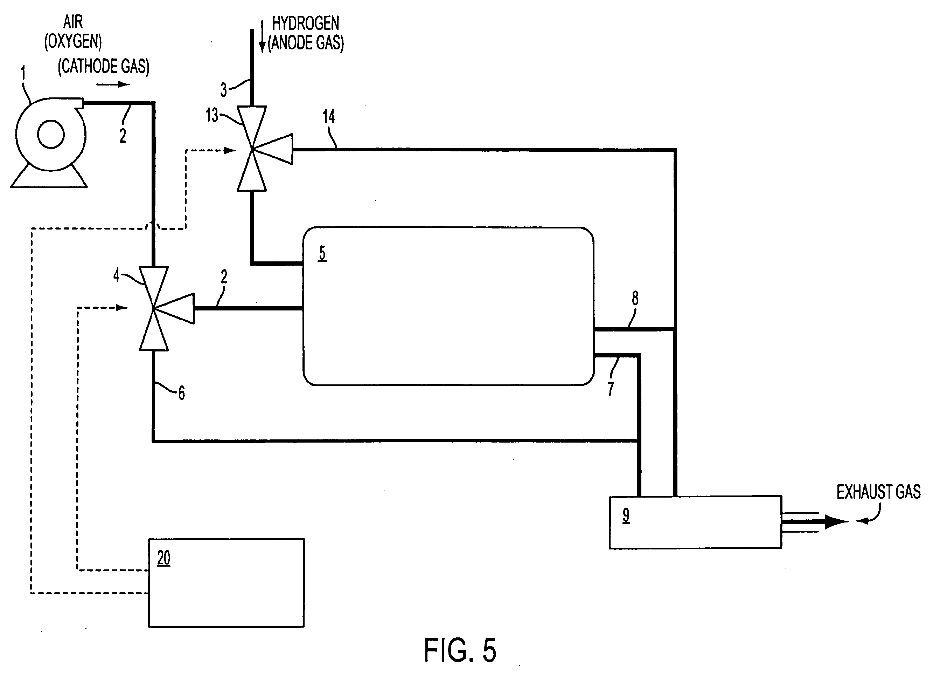

Fig. 5 shows the composition of the third embodiment of the operation of the fuel cell system of this invention. In this embodiment, the fuel cell system has an anode switch valve 13. The anode switch valve 13 switches the flow of hydrogen to the anode line 3 or the anode bypass line 14. The anode bypass line 14 is connected to the anode exhaust gas line 8.

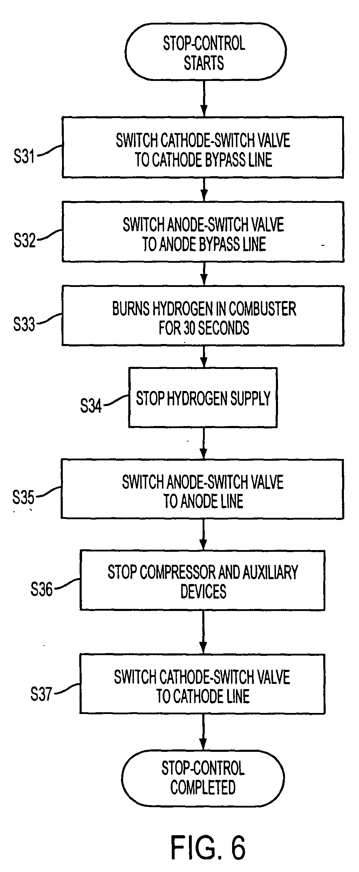

Below, the concrete control logic of a controller 20 is explained along with the flow chart shown in FIG. 6.

Stop control of the fuel cell system is performed as follows. First, in step S31, the cathode switch valve 4 is switched to the cathode bypass line 6. The air that does not go via the fuel cell 5, i.e., the non-saturated air is supplied to the catalyst burner 9.

In step S32, the anode switch valve 13 is switched to the anode bypass line 19. The hydrogen that does not go via the fuel cell 5, i.e., the unreacted hydrogen, is supplied to the catalyst burner 9. In step S33, the catalyst burner 9 operates so that the hydrogen and air that are supplied react and burn. Operation time determines the moisture in the catalyst burner 9 as the time which can decrease enough based on flow of the hydrogen and air for combustion temperature turning into predetermined temperature, and temperature at the time. In this embodiment, combustion time is set as 60 seconds. After maintaining operation of step S33 for 60 seconds, step S34 is performed.

In step S34, the hydrogen supply to the anode switch valve 13 is stopped. In step S35, and the anode switch valve 13 is returned to the anode line 3. Operation of a compressor and other auxiliaries are stopped in step S36, and in step S37, the cathode switch valve 4 is returned to the cathode line 2, and the processing ends.

According to this embodiment, the fuel cell system has the anode switch valve 14 in the middle of the anode line 3. When the fuel cell system stops, hydrogen flows to the catalyst burner 9 through the anode bypass line 14 by the operation of the anode switch valve 14. Before the fuel cell system stops, the temperature of the catalyst burner 9 rises by combustion of hydrogen. The fuel cell system promotes evaporation of the moisture in the catalyst burner 9, and shortens the time required to stop the fuel cell system.

Moreover, the fuel cell system stops the hydrogen of the anode bypass line 14 (step S34), after it supplies air from the cathode bypass line 6, and it suspends a compressor 1 (step S36), and it changed the cathode switch valve 4 to the cathode line 2 (Step S37). Therefore, the fuel cell system can purge the inside of the catalyst burner 9 with air after hydrogen combustion, and can control re-condensation of reaction water further.

Furthermore, since the fuel cell system operates so that the combustion time for removing the moisture in the catalyst burner 9 may be found beforehand and the catalyst burner 9 may burn hydrogen only in the meantime, the exhaust temperature sensor 10 in the first embodiment becomes unnecessary, and the fuel cell system holds down the cost of a system.

This invention is not limited to the explained embodiments, and various modifications and changes are possible.

For example, in the first and the second embodiments, end of control may not be performed based on temperature, but an end of control may be made like the third embodiment based on time. If it does so, since a temperature sensor will become unnecessary, cost can be held down. Moreover, in the third embodiment, the fuel cell system can also make an end of control judgment based on temperature like the first and the second embodiments. An exact judgment can be made if it is made such.

Moreover, in the third embodiment, the fuel cell system can also include the heating device 12 in the middle of the cathode bypass line 6 like the second embodiment. If it is made such, evaporation of the moisture in the catalyst burner 9 will be promote further, and it will become possible to shorten the stop time of a fuel cell system further. The entire contents of Japanese Application No.2003-209004, filed August 27, 2003, on which this application is based, is incorporated herein by refernce.

## Claims

1. A fuel cell system comprising:
a fuel cell which generates electrical power by causing hydrogen and oxygen to react;
a burner which burns discharge cathode gas and discharge anode gas from the fuel cell;
a cathode line which supplies cathode gas to the fuel cell;
an anode line which supplies anode gas to the fuel cell;
a cathode switch valve which switches the flow of cathode gas in the cathode line;
a cathode bypass line which connects the cathode switch valve and the burner;
a controller which controls the cathode switch valve to supply cathode gas via the cathode bypass line to the catalyst burner when the fuel cell stops.

2. The system according to claim 1, further comprising:
a heating device which heats air in the cathode bypass line;
wherein, the controller controls the heating device to heat the cathode gas supplied to the burner when the fuel cell stops.

3. The system according to claim 2, wherein the heating device is energization heating formula heating device.

4. The system according to claim 1, further comprising:
an anode switch valve which switches the flow of anode gas in an anode line; and
an anode bypass line which connects the anode switch valve and the burner;
wherein; the controller which controls the anode switch valve to supply anode gas to the burner when the fuel cell stops.

5. The system according to claim 1, wherein the burner is a catalyst burner which uses a precious-metale catalyst.

6. The system according to claim 1, further comprising:
an exhaust temperature sensor which detects the temperature of exhaust gas discharged from the burner;
wherein the controller controls the fuel cell system to stop the fuel cell system, if the temperature of the exhaust gas exceeds a predetermined temperature.

7. The system according to claim 1, further comprising:
an exhaust temperature sensor which detects the temperature of exhaust gas discharged from the burner; and
a cathode gas temperature sensor which detects the temperature of the cathode gas which flows in the cathode bypass line;
wherein the controller controls the fuel cell system to stop the fuel cell system if the difference of temperature of the exhaust gas and the cathode gas becomes within a predetermined difference of temperature.

8. The system according to claim 4,
wherein the controller controls the fuel cell system to stop the fuel cell system based on a combustion time in the burner of the anode gas supplied from the anode bypass line.

9. The system according to claim 1,
wherein the controller controls the fuel cell system to stop the fuel cell system based on lapsed time after changing the position of the cathode switch valve.

10. A fuel cell system comprising:
means for generating electrical power by causing hydrogen and oxygen to react;
means for burning discharge cathode gas and discharge anode gas from the fuel cell;
means for supplying cathode gas to the fuel cell;
means for supplying anode gas to the fuel cell;
means for switching the flow of cathode gas in the cathode line;
means for connecting the cathode switch valve and the burner;
means for controling the cathode switch valve to supply cathode gas via the cathode bypass line to the catalyst burner when the fuel cell stops.
